# NEUE EUROPÄISCHE PATENTSCHRIFT

(11) **EP 0 489 319 B2**
(45) Veröffentlichungstag und Bekanntmachung des Hinweises auf die Entscheidung über den Einspruch: **14.04.1999**
(45) Hinweis auf die Patenterteilung: 28.02.1996
(21) Anmeldenummer: 91119991.7
(22) Anmeldetag: 23.11.1991
(51) Int. Cl.: C08L 25/02, C08K 3/36, C08J 9/35

(54) **Verbundschaumstoffe mit niedriger Wärmeleitfähigkeit**
Composite foam with low thermoconductivity
Mousse composite à faible conductivité thermique

(30) Priorität: 05.12.1990 DE 4038784
(43) Veröffentlichungstag der Anmeldung: 10.06.1992
(73) Patentinhaber: BASF Aktiengesellschaft, 67063 Ludwigshafen (DE)
(72) Erfinder: Wolff, Bernardo, Dr., W-6800 Mannheim 1 (DE); Hohwiller, Frieder, W-6702 Bad Duerkheim (DE); Seybold, Guenther, Dr., W-6708 Neuhofen (DE)

(56) Entgegenhaltungen:
- EP-A- 0 340 707
- DE-A- 2 253 227
- NL-A- 7 008 571
- US-A- 4 048 272
- Ullmanns Encyclopedia of Industrial Chemistry, 5. Auflage, Band A11, 1988, S. 435, 444-448

## Beschreibung

Die Erfindung betrifft neuartige Verbundschaumstoffe aus Silica-Aerogel-Partikeln und Styrolpolymerisatschaumstoffen, die sich durch eine niedrige Wärmeleitfähigkeit auszeichnen.

Konventionelle Dämmstoffe auf Basis von Polyolefinen und Polyurethanen werden in der Regel unter Verwendung von organischen Treibmitteln, wie Fluorchlorkohlenwasserstoffen hergestellt. Das in den Zellen des Schaumstoffs eingeschlossene Treibmittel ist für das hohe Wärmedämmvermögen verantwortlich. Da derartige Treibmittel die Umwelt belasten, da sie langsam in die Atmosphäre entweichen, bestand die Aufgabe, Dämmstoffe mit hohen Wärmedämmvermögen zu entwickeln, die frei von umweltschädlichen organischen Treibmitteln sind.

Es ist bekannt, daß Silica-Aerogel ein hervorragendes Wärmedämmvermögen besitzt. Das Produkt ist jedoch nicht in beliebiger Formgebung herstellbar. Es zeigt ferner eine nur geringe Druckfestigkeit und ist bruchempfindlich. Darüber hinaus neigt eine lose Aerogel-Schüttung durch allmähliche Nachverdichtung zu einem gewissen Volumenschwund.

Aufgabe der Erfindung war es somit insbesondere, ausgehend von Silica-Aerogel, Dämmstoffe beliebiger Formgebung herzustellen und dabei die geringe Druckfestigkeit und die hohe Bruchempfindlichkeit des Aerogels sowie den Volumenschwund einer Aerogel-Schüttung durch Einbinden dieses Stoffes in eine Matrix auszugleichen, wobei die niedrige Wärmeleitfähigkeit erhalten werden sollte.

In der EP-A 340 707 war vorgeschlagen worden, Silica-Aerogel-Partikel mittels eines anorganischen oder organischen Bindemittels zu druckfesten Dämmstoffen zu verbinden. Die Wärmeleitfähigkeit dieser Produkte ist jedoch unbefriedigend.

Es wurde nun gefunden, daß die Aufgaben gelöst werden durch einen Verbundschaumstoff aus Silica-Aerogel-Partikeln und Styrolpolymerisatschaumstoffen.

Gegenstand der Erfindung ist somit ein Verbundschaumstoff mit niedriger Wärmeleitfähigkeit enthaltend
a) 20 - 80 Vol.-% Silica-Aerogel-Partikel mit einem mittleren Durchmesser von 0,1 bis 20 mm und einer Dichte von 0,08 bis 0,40 g/cm³,
b) 20 - 80 Vol.-% eines der Partikel der Komponente a) umhüllenden und miteinander verbindenden Styrolpolymerisatschaumstoffs mit einem Teilchendurchmesser von 0,2 bis 5 mm und einer Dichte von 0,01 bis 0,15 g/cm³ und gegebenenfalls
c) übliche Zusatzstoffe in wirksamen Mengen.

Gegenstand der Erfindung ist ferner ein Verfahren zur Herstellung derartigen Verbundschaumstoffe, das dadurch gekennzeichnet ist, daß man ein inniges Gemisch aus Silica-Aerogel-Partikeln und Styrolpolymerisatschaumstoff-Partikeln in einer nicht gasdicht schließenden Form auf eine Temperatur oberhalb des Erweichungspunkts des Styrolpolymerisat erhitzt.

Wesentlicher Bestandteil des neuen Verbundschaumstoffs sind Silica-Aerogel-Partikel, die einen mittleren Durchmesser von 0,1 bis 20 mm, vorzugsweise 0,5 bis 5 mm, insbesondere 1 bis 4 mm, aufweisen.

Die Silica-Aerogel-Partikel sind in der Regel perl- oder kugelförmig und haben eine Dichte zwischen 0,05 und 0,40, vorzugsweise zwischen 0,08 und 0,35 g/cm³ und eine Schüttdichte zwischen 0,04 und 0,25 g/cm³. Ihre Wärmeleitfähigkeit λ liegt zwischen 0,020 und 0,025 [W/mK].

Die Silica-Aerogel-Partikel bestehen im wesentlichen aus amorphen SiO₂ und enthalten abhängig von der Art ihrer Herstellung noch Wasserspuren und gegebenenfalls geringe Mengen organischer Verbindungen (bis 10 %). Sie werden in bekannter Weise aus Wasserglaslösung über die Stufen Silica-Hydrogel, Lösungsmittelaustausch und anschließender Trocknung hergestellt. Die Perlform kommt durch das Versprühen eines schnell gelierenden Kieselsäuresols aus einer speziell konstruierten Düse und Gelierung der Tropfen im Flug zustande. Nähere Einzelheiten dazu sind in der DE-A 21 03 243 beschrieben. Austausch des Hydrogelwassers gegen andere gegen SiO₂ chemisch inerte Flüssigkeiten sind beispielsweise in US-A 2,093,454, US-A 3,977,993, JA-A 53 025 295 beschrieben, die Trocknung der Lyogele ist beispielsweise in US-A 2,093,454, US-A 2,249,767, FR-A 130 417, US-A 3,672,833, EP-A 00 18 955, US-A 4,327,065, EP-A 00 67 741, DE-A 34 29 671, EP-A 01 86 149, US-A US-A-4,610,863 beschrieben. Vorteilhaft wird als Gelflüssigkeit zur überkritischen Trocknung trockenes Methanol verwendet, so dap die resultierenden Aerogele hydrophob mit einem organischen Kohlenstoffgehalt von etwa 5 % sind.

In den neuen Verbundschaumstoffen sind die Silica-Aerogel-Partikel durch einen Styrolpolymerisatschaumstoff miteinander verbunden, der eine Dichte von 0,01 bis 0,15 g/cm³, vorzugsweise 0,015 bis 0,09 g/cm³ insbesondere 0,02 bis 0,07 g/cm³ aufweist.

Styrolpolymerisate im Sinne dieser Erfindung sind Polystyrol und Mischpolymerisate des Styrols, die mindestens 50 Gew.-%, vorzugsweise mindestens 80 Gew.-% Styrol einpolymerisiert enthalten. Als Comonomere kommen z. B. in Betracht α-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Die neuen Verbundschaumstoffe können daneben noch übliche Zusatzstoffe in wirksamen Mengen enthalten, wie Farbstoffe, Pigmente, Füllstoffe, Flammschutzmittel, Synergisten für Flammschutzmittel, Antistatica, Stabilisatoren, Schmiermittel, Trübungsmittel u. dergleichen. Die Zusatzstoffe können sowohl in der Aerogel- als auch in der Schaumstoffphase vorliegen.

Die Herstellung der Verbundschaumstoffe erfolgt zweckmäßig durch Erhitzen eines innigen Gemisches aus Silica-Aerogel-Partikeln und Styrolpolymerisatschaumstoff-Partikeln in einer nicht gasdicht schließenden Form auf eine Temperatur oberhalb des Erweichungspunkts des Styrolpolymerisats. Man verwendet Schaumstoffpartikel mit einem Teilchendurchmesser von 0,2 bis 5 mm, vorteilhaft 0,25 bis 4 mm und insbesondere 0,3 bis 3 mm. Eine besonders hohe Formteilgüte und gute Verschweißung wird erzielt, wenn zumindest ein Teil der Schaumstoff-Partikel kleiner sind als die Zwickelhohlräume der Schüttung der Aerogel-Partikel.

Beim Erhitzen, vorteilhaft mittels Dampf oder Heipluft, erweicht das Styrolpolymerisat, die Schaumstoffpartikel dehnen sich dabei aus und durch den dabei entstehenden Druck werden die Zwickelhohlräume vom Schaumstoff weitgehend ausgefüllt, und der Schaumstoff umhüllt die Aerogel-Partikel zu einem festen Verbund. Nach dem Abkühlen wird das Verbundschaumstoff-Formteil aus der Form entnommen und gegebenenfalls getrocknet. In einer Blockform hergestellte Formteile können mit geeigneten Schneidanlagen zu Platten geschnitten werden.

### Beispiele

Die in der Tabelle angeführten Volumenmengen an feinteiligen Partikeln aus expandiertem Polystyrol und hydrophobierten Silica-Aerogel-Partikeln werden innig vermischt und in eine für die Herstellung von Polystyrolschaumformkörpern übliche nicht gasdicht schließende Form eingefüllt. Die Form wird 15 Sekunden mit Wasserdampf (1 bar, 100°C) durchspült. Nach 10 Minuten kann entformt werden. Das Formteil wird anschließend 24 Std. bei 40°C getrocknet. Die Ergebnisse sind in der Tabelle zusammengefaßt.

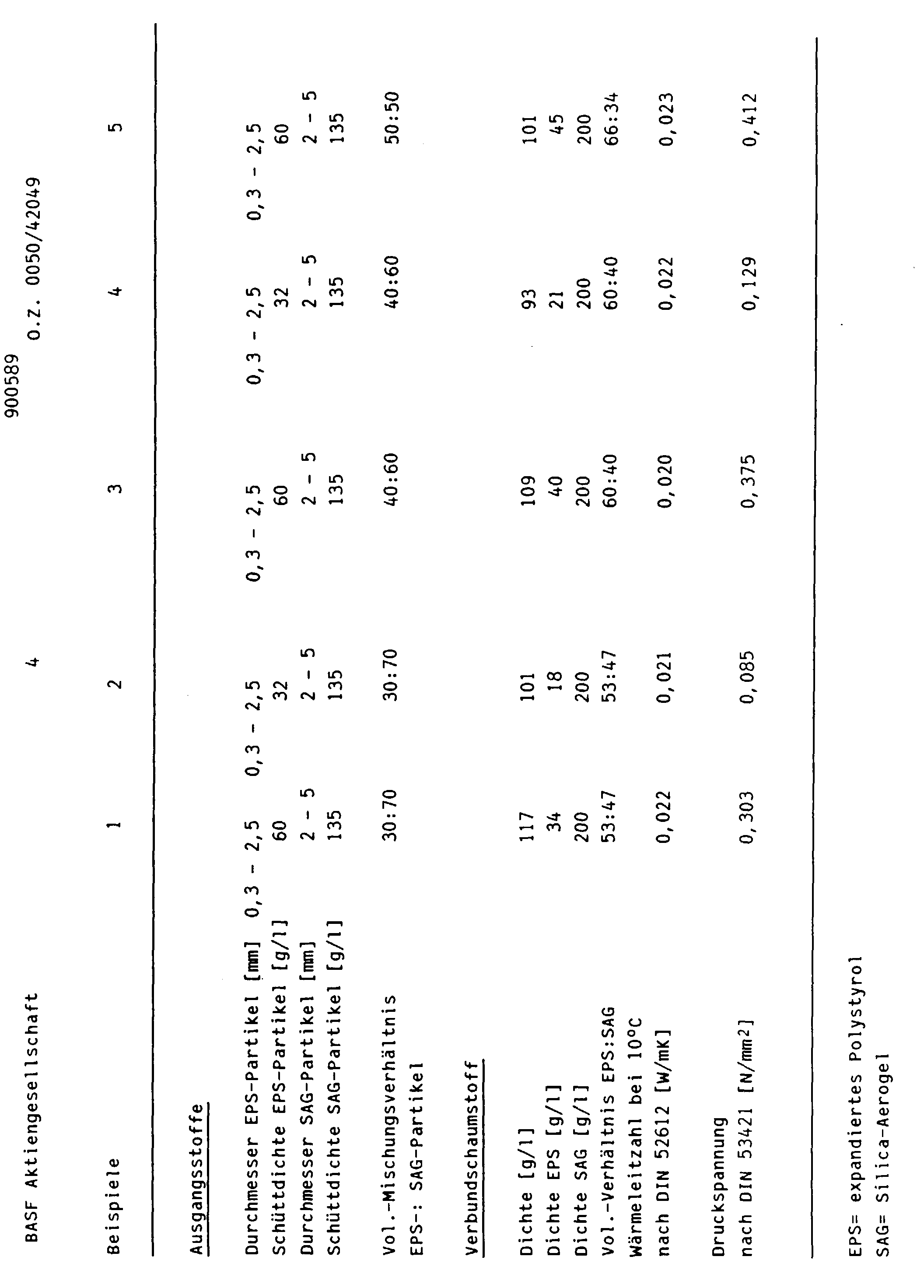

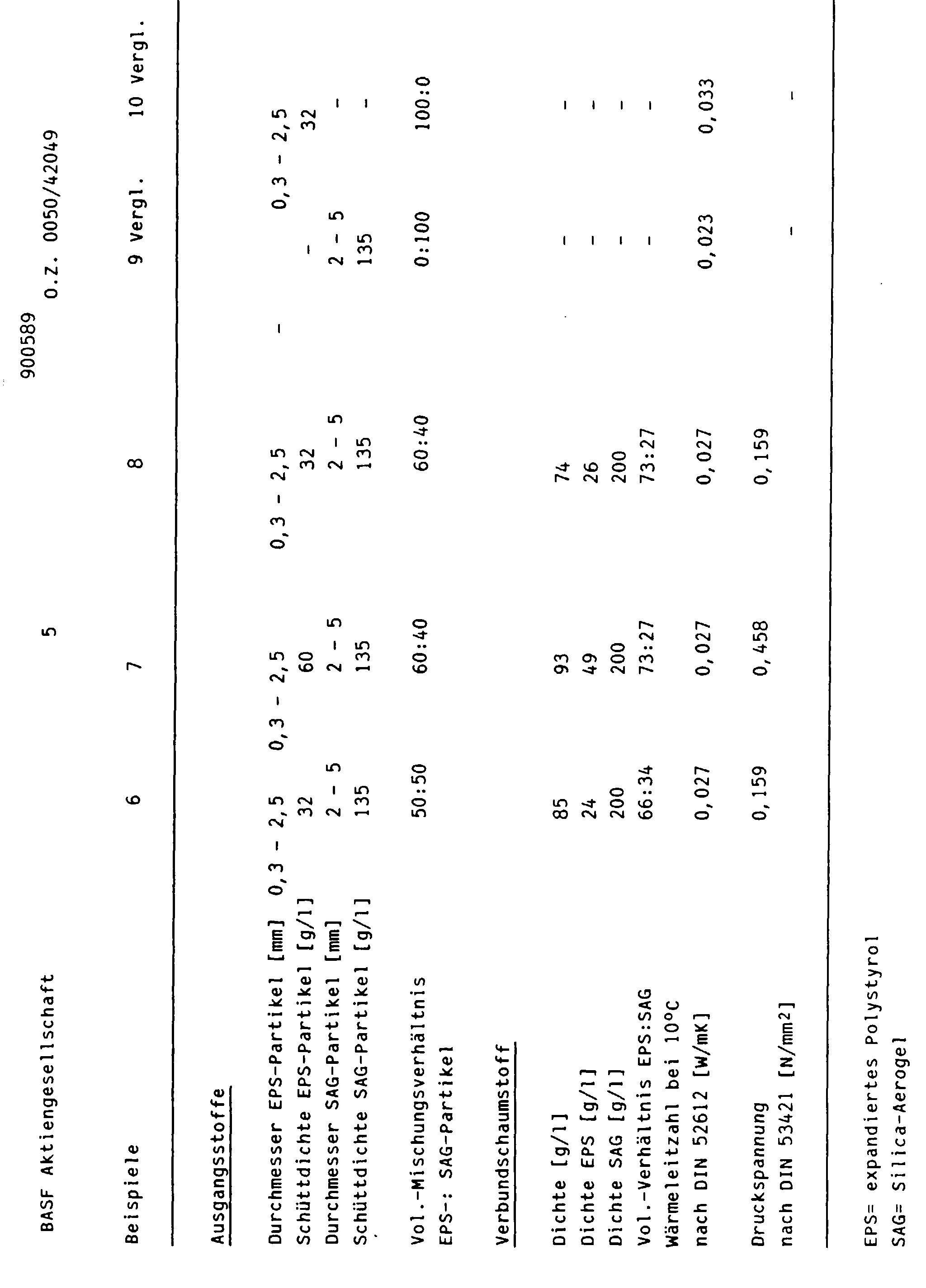

## Patentansprüche

1. Verbundschaumstoff mit niedriger Wärmeleitfähigkeit, enthaltend
a) 20 - 80 Vol.-% Silica-Aerogel-Partikel mit einem mittleren Durchmesser von 0,1 bis 20 mm und einer Dichte von 0,08 bis 0,40 g/cm³,
b) 20 - 80 Vol-% eines die Partikel der Komponente a) umhüllenden und miteinander verbindenden Styrolpolymerisat-Partikelschaumstoffs mit einem Teilchendurchmesser von 0,2 bis 5 mm und einer Dichte von 0,01 bis 0,15 g/cm³ und gegebenenfalls
c) übliche Zusatzstoffe in wirksamen Mengen.

2. Verbundschaumstoffe gemäß Anspruch 1, dadurch gekennzeichnet, daß die Silica-Aerogel-Partikel hydrophob sind.

3. Verfahren zur Herstellung von Verbundschaumstoffen gemäß Anspruch 1, dadurch gekennzeichnet, daß man ein inniges Gemisch aus Silica-Aerogel-Partikeln und Styrolpolymerisatschaumstoff-Partikeln in einer nicht gasdicht schließenden Form auf eine Temperatur oberhalb des Erweichungspunkts des Styrolpolymerisat erhitzt.

## Claims

1. A composite foam of low thermal conductivity, comprising
a) 20 - 80% by volume of silica aerogel particles having a mean diameter of from 0.1 to 20 mm and a density of from 0.08 to 0.40 g/cm³,
b) 20 - 80% by volume of a styrene polymer particle foam which surrounds the particles of component a) and binds them to one another and which has a particle diameter of from 0.2 to 5 mm and a density of from 0.01 to 0.15 g/cm³, and, if desired,
c) conventional additives in effective amounts.

2. A composite foam as claimed in claim 1, wherein the silica aerogel particles are hydrophobic.

3. A process for the production of a composite foam as claimed in claim 1, which comprises heating an intimate mixture of silica aerogel particles and styrene polymer foam particles to a temperature above the softening point of the styrene polymer in a mold which does not seal in a gas-tight manner.

## Revendications

1. Produit alvéolaire composite de faible conductivité thermique, contenant
a) 20 à 80 % en volume de particules de silica-aérogel d'un diamètre moyen de 0,1 à 20 mm et d'une densité de 0,08 à 0,40 g/cm³,
b) 20 à 80 % en volume d'un polymérisat de styrène alvéolaire d'une densité de 0,01 à 0,15 g/cm³, constitué de particules alvéolaires expansées et soudées ensemble qui enrobent et assemblent les particules du composant a), et éventuellement
c) des additifs usuels en quantités efficaces.

2. Produits alvéolaires selon la revendication 1, caractérisés par le fait que les particules de silica-aérogel sont hydrophobes.

3. Procédé de préparation de produits alvéolaires composites selon la revendication 1, caractérisé par le fait que, dans un moule fermant de façon non étanche aux gaz, on chauffe un mélange intime de particules de silica-aérogel et de particules de polymérisat de styrène alvéolaire à une température supérieure au point de ramollissement du polymérisat de styrène.
